# EUROPEAN PATENT APPLICATION

(11) **EP 4 684 908 A2**
(43) Date of publication of application: **28.01.2026**
(21) Application number: 25171149.5
(22) Date of filing: 17.04.2025
(51) Int. Cl.: B23P 19/02, B25B 27/00, B23P 19/04

(54) **MACHINE FOR INSTALLING FULL FACE INTEGRATED SEALING GASKET ON GRP PIPE JOINTING COUPLINGS**

(30) Priority: 25.07.2024 TR 202409670
(71) Applicant: Subor Boru Sanayi ve Ticaret Anonim Sirketi, 34718 Kadiköy, Istanbul (TR)
(72) Inventor: ATES, Cezmi, Sakarya (TR); AKBULUT, Geylani Tuncay, Sakarya (TR)
(74) Representative: Yamankaradeniz, Kemal

(57) **Abstract**

The present invention relates to a gasket installing machine for the installation of full-face integral gaskets (C) in couplings (K) joining glass fiber reinforced polyester (GRP) pipes to each other, and for the uniform installation of the full-face integral gasket (C) in the channelled coupling (K).

## Description

### Field of the Invention

The invention relates to a machine used for mounting full face integrated gaskets on couplings that join glass fiber reinforced polyester (CTP) pipes.

In particular, the present invention relates to a gasket installing machine that eliminates production errors by enabling the uniform assembly of a full-face integrated gasket into a channelled coupling.

### State of the Art

Today, glass fiber reinforced polyester (GRP) pipes are used in drinking water and clean water transmission lines, irrigation main transmission and network lines, sewerage lines, etc. The connection of glass fiber reinforced polyester (GRP) pipes to each other is provided by glass fiber reinforced polyester (GRP) couplings. There is a gasket inside said couplings to ensure tightness. Two types of couplings are generally used in joining GRP pipes. One of these is the full face integrated gasket coupling called FWC. The other one is a gasketed GRP coupling.

In current applications, the gasket installing machine is only used to mount gaskets of a certain profile but with much narrower dimensions than a full face integrated gasket to the coupling. Whereas with a full face integrated gasket, the width is almost the same as the width of the coupling. It is not possible to install the full-face integrated gasket into the channel inside the coupling with existing gasket installing machines. Because there are many teeth on the full face integrated gasket and many channels on the coupling. For this reason, it is not possible to uniformly mount the full face integrated gasket to the channels in the coupling with the classical mechanisms found in current state of the art machines. Therefore, the process of properly depositing the large full face integrated gasket teeth into many channels in the coupling at the same time is the biggest problem of current machines. For this reason, there was a need to eliminate the problems encountered in the installation of full face integrated gaskets to channel couplings in the state of the art.

As an example of the state of the art in the research conducted in the literature, the document numbered TR2011/08412, which was previously applied by us, can be cited. The said document relates to a gasket installing machine that enables the installation of gaskets to couplings, which are connecting elements of pipes, in the GRP (glass fiber reinforced plastic) pipe industry. In said gasket installing machine, it is not possible to install the full face integrated gasket by hammering and then pressing it into the gasket channel in the coupling.

As a result, the existence of the above problems and the inadequacy of the existing solutions necessitated a development in the relevant technical field.

### Purpose of the Invention

The present invention relates to a full face integrated sealing gasket installing machine for GRP pipe jointing couplings which eliminates the abovementioned disadvantages and brings new advantages to the relevant technical field.

The main purpose of the present invention is to provide a gasket installing machine for the uniform installation of a full-face integrated gasket in a channelled coupling.

The purpose of the present invention is to provide a gasket installing machine that enables the assembly of a full face integrated gasket by applying controllable hammering force to the full face integrated gasket by means of a flat pressure hammering roller, a roller pressure hammering roller, a stopper pressure roller and a pressure roller.

A further purpose of the present invention is to provide a gasket installing machine that eliminates manufacturing errors by enabling the assembly of a full-face integrated gasket into the channel in the coupling.

In order to fulfil all the purposes set out above and which may arise from the detailed description, the invention is a gasket installing machine used for mounting full-face integrated gaskets on couplings joining glass fibre reinforced polyester pipes to each other and comprising; a main body, side support roller on the main body, which supports the coupling during its rotation and prevents the coupling from escaping from the rotation axis, middle support roller that provides counter force support to the coupling on the main body during hammering and rotation movement, characterized by comprising the following;
- pressure cylinder on the main body, which gives a circular rotation movement to the coupling through the reducer and mounts the gasket to the coupling with a controlled force from the required surfaces,
- mechanical sliding table, which is located on the main body and enables the gasket to be attached to the coupling by applying a controllable force to the gasket with the pressure cylinder,
- pressure cylinder movement table, which is located on the main body and brings the pressure cylinder to the pressure position with a mechanical sliding table,
- flat pressure hammering cylinder, which hammers the gasket on the main body and mounts the same to the gasket channel of the coupling,
- roller pressure hammering cylinder, which presses the gasket on the main body and mounts the same to the gasket channel of the coupling,
- stopper pressure cylinder, which is located on the main body and has a complementary function to the flat pressure hammering cylinder and the roller pressure hammering cylinder, applies pressure to the stopper of the gasket and mounts it to the gasket channel of the coupling.

The structural and characteristic features of the present invention will be understood clearly by the following figures and the detailed description made with reference to these figures. Therefore the evaluation shall be made by taking these figures and the detailed description into consideration.

### Figures to Help Understanding the Invention

**Figure 1****:** General view of the gasket installing machine of the present invention.
**Figure 2****:** Top view of the gasket installing machine of the present invention.

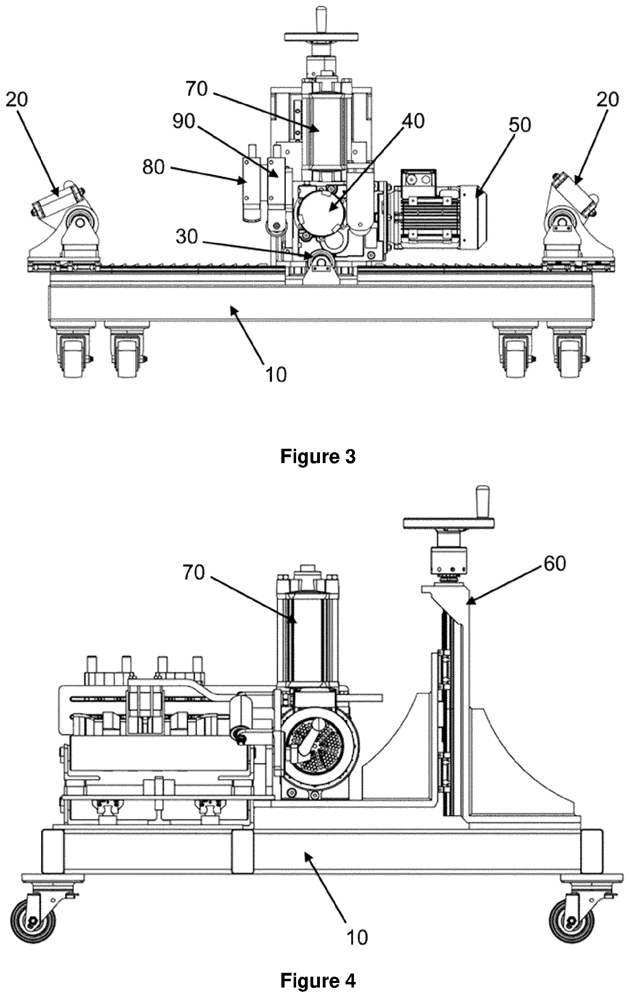

**Figure 3****:** Front view of the gasket installing machine of the present invention.
**Figure 4****:** Side view of the gasket installing machine of the present invention.
**Figure 5****:** Assembled view of the gasket installing machine as the gasket is mounted on the coupling.

### Description of the Part References

**10.** Main body
**20.** Side support roller
**30.** Middle support roller
**40.** Pressure cylinder
**50.** Reducer
**60.** Mechanical sliding table
**70.** Pressure cylinder movement table
**80.** Flat pressure hammering cylinder
**90.** Roller pressure hammering cylinder
**100.** Stopper pressure cylinder
**K.** Coupling
**C.** Gasket

### Detailed Description of the Invention

In this detailed description, the preferred alternatives of the inventive gasket installing machine are described only for clarifying the subject manner such that no limiting effect is created.

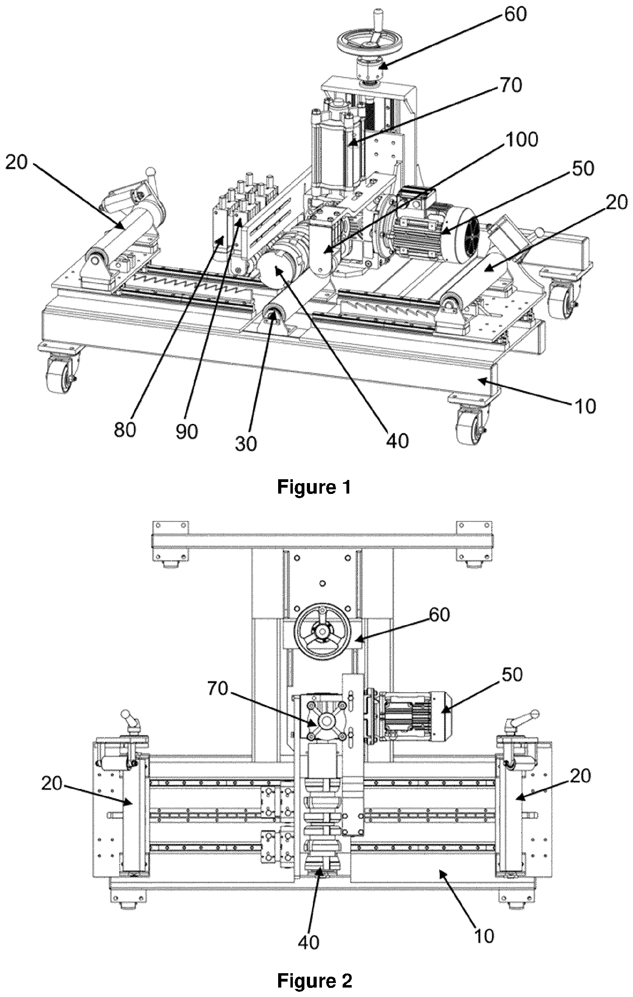

Figure 1 shows the general view of the gasket installing machine of the present invention. Accordingly, the gasket installing machine in its most basic form comprises the following: a main body (10), a side support roller (20) on the main body (10) that supports the coupling (K) during its rotational movement and prevents the coupling (K) from escaping from the rotation axis, middle support roller (30), which applies counter force support to the coupling (K) on the main body (10) during the hammering and rotation movement, pressure cylinder (40), which gives a circular rotation movement to the coupling (K) on the main body (10) and mounts the gasket (C) to the coupling (K) with a controlled force from the required surfaces, reducer (50) that drives the pressure cylinder (40), the mechanical sliding table (60) that ensures the gasket (C) is properly attached to the coupling (K) by applying a controllable force to the gasket (C) with the pressure cylinder (40) on the main body (10), the pressure cylinder movement table (70), which brings the pressure cylinder (40) to the pressing position with mechanical sliding table (60), flat pressure hammering cylinder (80), which hammers the gasket (C) on the main body (10) and mounts it to the gasket channel of the coupling (K), roller pressure hammering cylinder (90), which presses the gasket (C) on the main body (10) and mounts it to the gasket channel of the coupling (K), stopper pressure cylinder (100), which complements the flat pressure hammering cylinder (80) and the roller pressure hammering cylinder (90) by applying pressure to the stopper of the gasket (C) and assembling it in the gasket groove of the coupling (K).

There is a side support roller (20) on both sides on the main body (10), which constitutes the main structure of the gasket installing machine subject to the invention, and a middle support roller (30) in the middle on the main body (10). Said side support roller (20) ensures that the coupling (K) is supported during its rotational movement on the main body (10) and that it prevents the coupling (K) from escaping from the rotation axis. The middle support roller (30) applies counter force support to the coupling (K) during the hammering and rotation movement on the main body (10).

The coupling (K) rotates by means of the pressure cylinder (40) located on the main body (10) and driven by the reducer (50), and the gasket (C) is mounted to the coupling (K) with a controlled force from the required surfaces.

Controllable force is applied to the gasket (C) by the pressure cylinder (40) through the mechanical sliding table (60) located on the main body (10), ensuring that the gasket (C) is properly attached to the coupling (K). With said mechanical sliding table (60), the pressure cylinder (40) is brought to the printing position by means of the pressure cylinder movement table (70) located on the main body (10).

During the assembly of the gasket (C) to the coupling (K) with the pressure cylinder (40) by means of the mechanical sliding table (60), at very short time intervals, the gasket (C) is hammered by means of the flat pressure hammering cylinder (80) on the main body (10) and at the same time, the gasket (C) is roller pressed by means of the roller pressure hammering cylinder (90) and the coupling (K) is assembled into the gasket channel.

The stopper pressure cylinder (100) on the main body (10) complements the flat pressure hammering cylinder (80) and the roller pressure hammering cylinder (90) by applying pressure on the stopper of the gasket (C) and to ensure that the coupling (K) is mounted into the gasket channel. With the guide pressure wheel located at the end of the stopper pressure cylinder (100), the assembly of the gasket (C) is ensured by axing it to the center of the coupling (K).

*The working principle of the gasket installing machine subject to the invention is as follows;*

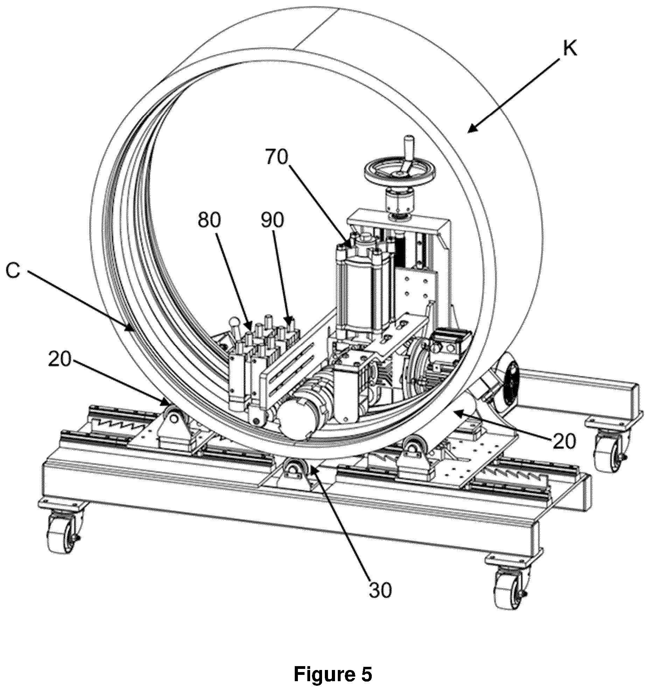

As seen in Figure 5, the coupling (K) placed on the gasket installing machine and the ready-to-install gasket (C) are supported by the middle support roller (30) and side support roller (20). The coupling (K) is prevented from escaping the axis with the side support rollers (20).

Pre-positioning is carried out by means of pressure cylinder movement table (70) and pressure is applied to the gasket (C) with a controllable force by using the mechanical sliding table (60) and the pressure cylinder (40). The pressure cylinder (40), which applies full surface pressure to the gasket (C) with the drive of the reducer (50), also rotates the coupling (K) and applies pressure along the circle so that the gasket (C) passes into the coupling (K) channels. At the same time, a controllable hammering force is applied to the gasket (C) in very short time intervals by the flat pressure hammering cylinder (80) and the roller pressure hammering cylinder (90). During the process, a controllable pressure is applied to the stopper area of the gasket (C) with the stopper pressure cylinder (100) and the gasket (C) is pivoted to the center of the coupling (K) with the guide pressure wheel at the end of the stopper pressure cylinder (100).

## Claims

1. A gasket installing machine that used in the assembly of full face integrated gaskets (C) to the couplings (K) that connect glass fiber reinforced polyester pipes (GRP), comprising; a main body (10), side support roller (20) on the main body (10), which supports the coupling (K) during its rotation and prevents the coupling (K) from escaping from the rotation axis, middle support roller (30) that provides counter force support to the coupling (K) on the main body (10) during hammering and rotation movement, ***characterized by comprising;***
- pressure cylinder (40) on the main body (10), which gives a circular rotation movement to the coupling (K) through the reducer (50) and mounts the gasket (C) to the coupling (K) with a controlled force from the required surfaces,
- mechanical sliding table (60), which is located on the main body (10) and enables the gasket (C) to be attached to the coupling (K) by applying a controllable force to the gasket (C) with the pressure cylinder (40),
- pressure cylinder movement table (70), which is located on the main body (10) and brings the pressure cylinder (40) to the pressure position with a mechanical sliding table (60),
- flat pressure hammering cylinder (80), which mounts the coupling (K) in the gasket channel by hammering the gasket (C) on the main body (10),
- roller pressure hammering cylinder (90), which which mounts the coupling (K) in the gasket channel by pressing the the gasket (C) on the main body (10)
- stopper pressure cylinder (100), which is located on the main body (10) and has a complementary function to the flat pressure hammering cylinder (80) and the roller pressure hammering cylinder (90), applies pressure to the stopper of the gasket (C) and mounts the same to the gasket channel of the coupling (K).

2. The gasket installing machine according to claim 1, **characterized by comprising;** a guide pressure wheel at the end of said stopper pressure cylinder (100) , which enables the gasket (C) to be mounted by pivoting the same to the center of the coupling (K).
